# EUROPÄISCHE PATENTSCHRIFT

(11) **EP 1 000 241 B1**
(45) Veröffentlichungstag und Bekanntmachung des Hinweises auf die Patenterteilung: **07.05.2003**
(21) Anmeldenummer: 99910117.3
(22) Anmeldetag: 10.02.1999
(51) Int. Cl.: F02M 55/02

(54) **KRAFTSTOFFVERSORGUNGSANLAGE EINER BRENNKRAFTMASCHINE**
FUEL SUPPLY SYSTEM IN AN INTERNAL COMBUSTION ENGINE
SYSTEME D'ALIMENTATION EN CARBURANT POUR MOTEUR A COMBUSTION INTERNE

(30) Priorität: 27.05.1998 DE 19823639
(43) Veröffentlichungstag der Anmeldung: 17.05.2000
(73) Patentinhaber: ROBERT BOSCH GMBH, 70442 Stuttgart (DE)
(72) Erfinder: REMBOLD, Helmut, D-70435 Stuttgart (DE); GROMMES, Erwin, D-74182 Obersulm (DE); BUCHWALD, Hermann, D-74360 Ilsfeld (DE); BÄSSLER, Albrecht, D-70825 Korntal-Münchingen (DE)
(86) Internationale Anmeldenummer: DE9900352
(87) Internationale Veröffentlichungsnummer: WO99061782

(56) Entgegenhaltungen:
- DE-A- 19 640 826
- DE-C- 4 310 408
- US-A- 5 433 182

## Beschreibung

### Stand der Technik

Die Erfindung geht aus von einer Kraftstoffversorgungsanlage zum Zuliefern von Kraftstoff für eine Brennkraftmaschine nach dem Oberbegriff des Anspruchs 1.

Bisher gab es Kraftstoffversorgungsanlagen, bei denen eine erste Kraftstoffpumpe aus einem Kraftstoffvorratsbehälter Kraftstoff über eine Kraftstoffverbindung zu einer zweiten Kraftstoffpumpe fördert. Die zweite Kraftstoffpumpe ihrerseits fördert den Kraftstoff zu zwei Kraftstoffverteilerleisten. An jeder Kraftstoffverteilerleiste sind mehrere Kraftstoffventile angeschlossen. Üblicherweise ist die Anzahl der Kraftstoffventile gleich der Anzahl der Zylinder der Brennkraftmaschine. Die Kraftstoffversorgungsanlage ist so gebaut, daß die Kraftstoffventile den Kraftstoff direkt in je einen Brennraum der Brennkraftmaschine spritzen. Beim Betrieb dieser Kraftstoffversorgungsanlage ist ein hoher Druck am Eingang der Kraftstoffventile und damit in den Kraftstoffverteilerleisten erforderlich.

Bei einer Brennkraftmaschine, bei der zwei Reihen von V-förmig zueinander angeordneten Zylindern vorhanden sind, werden für jede Reihe je eine Kraftstoffverteilerleiste vorgesehen (z.B. DE-C-4 310 408).

Weil die Kraftstoffventile unmittelbar an den Kraftstoffverteilerleisten angeschlossen sind, ist es wichtig, daß in jeder der beiden Kraftstoffverteilerleisten der genau gleiche Druck herrscht. Gefordert wird, daß dieser Druck sehr genau und schnell der jeweiligen Betriebsbedingung der Brennkraftmaschine angepaßt werden kann. Diese Probleme konnten bei bisher bekannten Kraftstoff versorgungsanlagen nicht zufriedenstellend gelöst werden bzw. der Aufwand zur Lösung dieser Probleme war bisher ziemlich hoch.

Das Steuern des Drucks des Kraftstoffs in den Kraftstoffverteilerleisten kann mit Drucksteuerventilen geschehen. Bisher war der Aufwand zum Steuern des Drucks in den Kraftstoffverteilerleisten ziemlich hoch und/oder ziemlich ungenau und/oder es hat sich herausgestellt, daß der vorgesehene Ort für das Drucksteuerventil die Dauerhaltbarkeit und/oder die Regelgüte des Drucksteuerventils negativ beeinflußt. Bisher war man der Meinung, daß zum genauen Regeln des Drucks in den Kraftstoffverteilerleisten ein ziemlich hoher Aufwand getrieben werden muß oder daß man, falls man diesen hohen Aufwand nicht treiben will, eine weniger gute Druckeinstellung, insbesondere voneinander abweichende Drücke in den Kraftstoffverteilerleisten, in Kauf nehmen muß.

Bei manchen bekannten Kraftstoffversorgungsanlagen mußte eine überaus lange Hochdruckleitung installiert werden, um zu erreichen, daß der Druck in den beiden Kraftstoffverteilerleisten einigermaßen genau steuerbar ist. Dies erhöhte den Herstellungsaufwand enorm.

Weil eine geringe Relativbewegung zwischen den beiden Kraftstoffverteilerleisten nicht vollständig verhindert werden kann, gibt es Kraftstoffversorgungsanlagen, bei denen die Verbindung zwischen den beiden Kraftstoffverteilerleisten über aus flexiblem, vorzugsweise gewebeverstärktem, gummielastischem Material bestehende Hochdruckleitungen geschieht. Wegen dem hohen Druck und der Aggressivität des Kraftstoffs in den Hochdruckleitungen gibt es allerdings zu vernünftigem Preis bisher noch keine ausreichend elastischen Hochdruckleitungen, mit denen eine ausreichende Flexibilität zwischen den beiden Kraftstoffverteilerleisten erreichbar wäre, weshalb eine direkte Hochdruckleitung als direkte Verbindung zwischen den beiden Kraftstoffverteilerleisten aus Dichtheitsgründen, Dauerhaltbarkeitsgründen, Funtionsgründen und Kostengründen bei der praktischen Anwendung nicht voll befriedigt.

### Vorteile der Erfindung

Die erfindungsgemäße Kraftstoffversorgungsanlage mit den kennzeichnenden Merkmalen des Anspruchs 1 hat den Vorteil, daß der Druck in den Kraftstoffverteilerleisten sehr genau, insbesondere mit hoher Regelgüte, eingestellt werden kann. Es wird erreicht, daß der Druck bei sich ändernder Betriebsbedingung der Brennkraftmaschine sehr schnell und genau angepaßt werden kann. Weil mit dem einen Drucksteuerventil auch der Druck des Kraftstoffs in der zweiten Kraftstoffverteilerleiste und, falls gegebenenfalls vorhanden, in weiteren Kraftstoffverteilerleisten, geregelt werden kann, ist der Aufwand zum Herstellen und für den späteren Betrieb sowie bei späteren Wartungsarbeiten vorteilhafterweise besonders gering. Es müssen vorteilhafterweise nur ziemlich wenig hydraulische und elektrische Leitungen verlegt werden.

Dadurch, daß das Drucksteuerventil im Bereich der ersten Kraftstoffverteilerleiste vorgesehen ist, somit also ausreichend weit von der zweiten Kraftstoffpumpe entfernt ist, erhält man den Vorteil, daß nicht zu vermeidende von der zweiten Kraftstoffpumpe herrührende Druckpulsationen nicht zu einer Verschlechterung der Regelgüte des Drucksteuerventils und nicht zu einer Verkürzung der Dauerhaltbarkeit bzw. zu einer Verschlechterung im Laufe der Zeit der Regelgüte des Drucksteuerventils führen können. Insbesondere weil das Drucksteuerventil unmittelbar im Bereich der Kraftstoffverteilerleiste vorgesehen ist, werden durch das Volumen in der Kraftstoffverteilerleiste Druckpulsationen vorteilhafterweise zusätzlich geglättet, was die Druckeinstellqualität des Drucksteuerventils vorteilhafterweise günstig beeinflußt.

Insbesondere weil sich das Drucksteuerventil an der Kraftstoffverteilerleiste im Bereich des Zulaufanschlusses der Kraftstoffverteilerleiste befindet, wird auf besonders einfache Weise erreicht, daß mit dem nur einen Drucksteuerventil ausreichend genau auch der Druck in der zweiten Kraftstoffverteilerleiste gesteuert werden kann.

Vorteilhafterweise kann auf eine unmittelbare direkte kurze Verbindung zwischen den beiden Kraftstoffverteilerleisten verzichtet werden, was wegen hoher Drücke, stark schwankenden Temperaturen und wegen dynamischer Belastungen durch Druckpulsationen und relativer Schwingungen zwischen den beiden Kraftstoffverteilerleisten problematisch wäre.

Durch die in den abhängigen Ansprüchen aufgeführten Maßnahmen sind vorteilhafte Weiterbildungen und Verbesserungen der Kraftstoffversorgungsanlage nach dem Anspruch 1 möglich.

Wird die den aus dem Drucksteuerventil abströmenden Kraftstoff aufnehmende Kraftstoffleitung so verlegt, daß diese in die Kraftstoffverbindung einmündet, vorzugsweise unmittelbar an der Niederdruckseite der zweiten Kraftstoffpumpe, so erhält man den Vorteil, daß insgesamt wenig Leitungslänge verlegt werden muß.

Durch das Vorsehen der Zulaufanschlüsse der Kraftstoffverteilerleisten an deren Enden kann erreicht werden, daß zwischen der zweiten Kraftstoffpumpe und den Kraftstoffverteilerleisten vorteilhafterweise nur eine ziemlich kurze Hochdruckleitung verlegt werden muß.

Wird die von der zweiten Kraftstoffpumpe zu den Kraftstoffverteilerleisten führende Hochdruckleitung in zwei Hochdruckleitungszweige zerlegt, wobei der eine Zweig zu der einen Kraftstoffverteilerleiste und der andere Zweig zu der anderen Kraftstoffverteilerleiste führt, so können beide Kraftstoffverteilerleisten auf einfache Weise angeschlossen werden, wobei man den Vorteil erhält, daß keine unmittelbare Verbindung zwischen den beiden Kraftstoffverteilerleisten geschaffen werden muß, was problematisch wäre, weil infolge von Fertigungstoleranzen, Temperaturschwankungen und Schwingungen eine gewisse Relativbeweglichkeit zwischen den beiden Kraftstoffverteilerleisten gewährleistet sein muß. Ein weiterer besonderer Vorteil ist, daß für die Hochdruckleitung relativ starres kostengünstig beschaffbares Rohrmaterial verwendet werden kann und trotzdem bleibt die Relativbeweglichkeit zwischen den beiden Kraftstoffverteilerleisten gewährleistet. Insbesondere muß kein aus Gewebe und/oder Gummi und/oder Kunststoff bestehender flexibler Schlauch verwendet werden.

Sind beide Hochdruckleitungszweige gleich lang, so erhält man den Vorteil besonders guter Einstellbarkeit und Regelgüte des Drucks in den beiden Kraftstoffverteilerleisten, auch bei Verwendung nur des einen Drucksteuerventils an der ersten Kraftstoffverteilerleiste.

Teilt sich die Hochdruckleitung relativ kurz hinter der zweiten Kraftstoffpumpe oder bereits innerhalb der beiden Kraftstoffpumpe in die beiden Hochdruckleitungszweige, so erhält man den Vorteil einer besonders guten ausreichenden Relativbeweglichkeit zwischen den beiden Kraftstoffverteilerleisten, auch bei Verwendung eines besonders starren Rohrmaterials für die Hochdruckleitung.

### Zeichnung

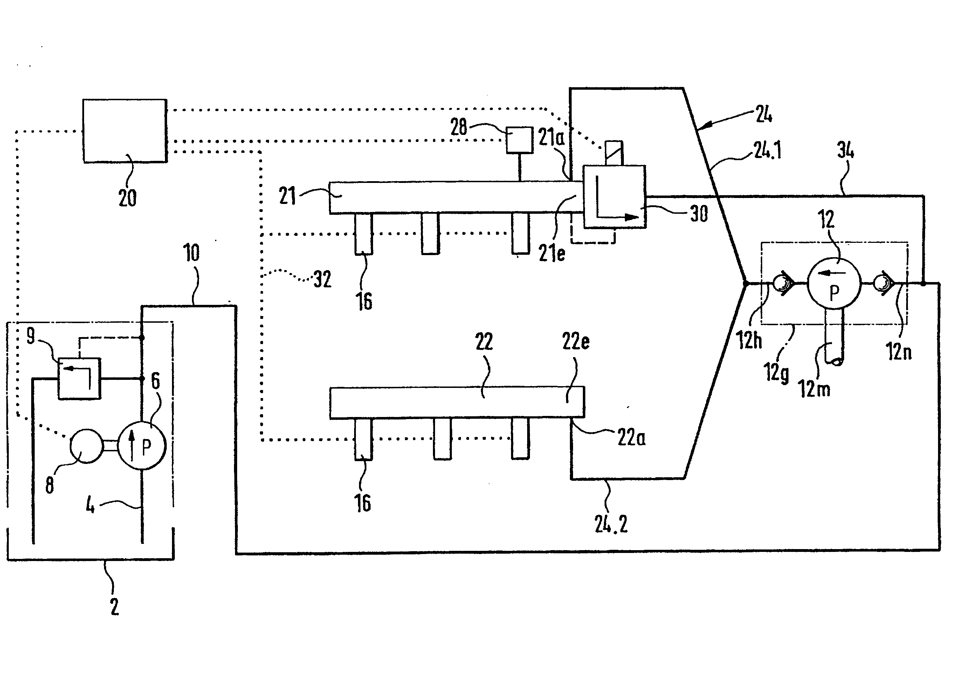

Ein ausgewähltes, besonders vorteilhaftes Ausführungsbeispiele der Erfindung ist in der Zeichnung vereinfacht dargestellt und in der nachfolgenden Beschreibung näher erläutert.

### Beschreibung des Ausführungsbeispiels

Die erfindungsgemäße Kraftstoffversorgungsanlage zum Zumessen von Kraftstoff für eine Brennkraftmaschine kann bei verschiedenen Arten von Brennkraftmaschinen verwendet werden. Die Brennkraftmaschine ist beispielsweise ein Ottomotor mit innerer Gemischbildung und Fremdzündung, wobei der Motor mit einem hin- und hergehenden Kolben (Hubkolbenmotor) oder mit einem drehbar gelagerten Kolben (Wankel-Kolbenmotor) versehen sein kann. Die Brennkraftmaschine ist beispielsweise ein Hybridmotor. Bei diesem Motor mit Ladungsschichtung wird das Kraftstoff-Luftgemisch im Brennraum im Bereich der Zündkerze so weit angereichert, daß eine sichere Entflammung garantiert ist, die Verbrennung im Mittel aber bei stark abgemagertem Gemisch stattfindet.

Der Gaswechsel im Brennraum der Brennkraftmaschine kann beispielsweise nach dem Viertaktverfahren oder nach dem Zweitaktverfahren erfolgen. Zur Steuerung des Gaswechsels im Brennraum der Brennkraftmaschine können in bekannter Weise Gaswechselventile (Einlaßventile und Auslaßventile) vorgesehen sein. Die Brennkraftmaschine ist vorzugsweise so ausgebildet, daß die Kraftstoffventile den Kraftstoff direkt in den Brennraum der Brennkraftmaschine spritzen. Die Steuerung der Leistung der Brennkraftmaschine erfolgt vorzugsweise durch Steuerung der dem Brennraum zugeführten Menge an Kraftstoff. Es kann aber auch vorgesehen sein, daß die für die Verbrennung des Kraftstoffs dem Brennraum zugeführte Luft mit einer Drosselklappe gesteuert wird. Auch über die Stellung der Drosselklappe kann die von der Brennkraftmaschine abzugebende Leistung gesteuert werden.

Die Brennkraftmaschine besitzt beispielsweise mehrere Zylinder, wobei ein Teil der Zylinder in einer ersten Reihe und ein Teil der Zylinder in einer zweiten Reihe angeordnet sind. Bei stirnseitiger Betrachtung der Brennkraftmaschine sind die Zylinder beispielsweise V-förmig zueinander angeordnet. Vorzugsweise ist je Zylinder je ein Kraftstoffventil vorgesehen. Für die Brennkraftmaschine sind üblicherweise zwei Kraftstoffverteilerleisten vorgesehen. Bei manchen Brennkraftmaschinen können es auch mehr als zwei Kraftstoffverteilerleisten sein. An jeder Kraftstoffverteilerleiste ist mindestens ein Kraftstoffventil angeschlossen. Üblicherweise sind an jeder Kraftstoffverteilerleiste zwei, drei, vier, fünf oder mehr Kraftstoffventile angeschlossen.

Um den Umfang der Beschreibung nicht unnötig umfangreich ausfallen zu lassen, beschränkt sich die nachfolgende Beschreibung des Ausführungsbeispiels auf einen Hubkolbenmotor mit sechs Zylindern mit je einem Kraftstoffventil, wobei die sechs Kraftstoffventile den Kraftstoff, üblicherweise Benzin, direkt in den Brennraum der Brennkraftmaschine hineinspritzen. Die Leistung der Brennkraftmaschine wird über Steuerung der eingespritzten Kraftstoffmenge gesteuert.

Bei Leerlauf und unterer Teillast erfolgt eine Ladungsschichtung mit Kraftstoffanreicherung im Bereich der Zündkerze. Dabei ist das Gemisch außerhalb dieses Bereichs um die Zündkerze sehr mager. Bei Vollast bzw. oberer Teillast wird eine homogene Verteilung zwischen Kraftstoff und Luft im gesamten Brennraum angestrebt.

Die Zeichnung zeigt in schematisierter Darstellungsweise einen Kraftstoffvorratsbehälter 2, eine Saugleitung 4, eine erste Kraftstoffpumpe 6, einen Elektromotor 8, ein Druckbegrenzungsventil 9, eine Kraftstoffverbindung 10, eine zweite Kraftstoffpumpe 12, sechs Kraftstoffventile 16 und eine elektrische bzw. elektronische Steuerungseinrichtung 20. Die Kraftstoffventile 16 werden in Fachkreisen häufig als Einspritzventile oder Injektoren bezeichnet. Die Kraftstoffverbindung 10 führt von der Druckseite der ersten Kraftstoffpumpe 6 zur Niederdruckseite 12n der zweiten Kraftstoffpumpe 12.

Aus der Kraftstoffverbindung 10 zweigt eine Leitung ab, über die Kraftstoff aus der Kraftstoffverbindung 10 direkt in den Kraftstoffvorratsbehälter 2 zurückgeleitet werden kann. Das Druckbegrenzungsventil 9 in dieser Leitung sorgt dafür, daß der Speisedruck in der Kraftstoffverbindung 10 einen bestimmten Wert nicht überschreitet.

Die erste Kraftstoffpumpe 6 wird von dem Elektromotor 8 angetrieben. Die erste Kraftstoffpumpe 6, der Elektromotor 8 und das Druckbegrenzungsventil 9 befinden sich im Bereich des Kraftstoffvorratsbehälters 2. Diese Teile sind vorzugsweise außen am Kraftstoffvorratsbehälter 2 angeordnet oder befinden sich innerhalb des Kraftstoffvorratsbehälters 2, was durch eine strichpunktierte Linie symbolhaft dargestellt ist. Die erste Kraftstoffpumpe 6, der Elektromotor 8 und das Druckbegrenzungsventil 9 bilden eine kompakte bauliche Einheit und können als Fördermodul bezeichnet werden.

Über ein mechanisches Übertragungsmittel 12m ist die zweite Kraftstoffpumpe 12 mechanisch mit einer nicht dargestellten Abtriebswelle der Brennkraftmaschine gekoppelt. Bei der Abtriebswelle handelt es sich beispielsweise um eine Kurbelwelle der Brennkraftmaschine.

Die zweite Kraftstoffpumpe 12 befindet sich innerhalb eines mit strichpunktierten Linien symbolhaft angedeuteten Pumpengehäuses 12g. Die zweite Kraftstoffpumpe 12 hat eine Niederdruckseite 12n und eine Hochdruckseite 12h.

Die Kraftstoffversorgungsanlage der Brennkraftmaschine umfaßt eine erste Kraftstoffverteilerleiste 21 und eine zweite Kraftstoffverteilerleiste 22. An der ersten Kraftstoffverteilerleiste 21 gibt es einen Zulaufanschluß 21a, und die Kraftstoffverteilerleiste 22 hat einen Zulaufanschluß 22a. Der Zulaufanschluß 21a ist im Bereich des der zweiten Kraftstoffpumpe 12 nächstliegenden Endes 21e der ersten Kraftstoffverteilerleiste 21 vorgesehen. Der Zulaufanschluß 21a befindet sich im Bereich des Endes 21e beispielsweise an einer Seitenwand der Kraftstoffverteilerleiste 21 oder stirnseitig am Ende 21e der Kraftstoffverteilerleiste 21. Auch der Zulaufanschluß 22a der zweiten Kraftstoffverteilerleiste 22 befindet sich an dem der zweiten Kraftstoffpumpe 12 nächstliegenden Endes 22e der zweiten Kraftstoffverteilerleiste 22.

Eine Hochdruckleitung 24 führt von der Hochdruckseite 12h der zweiten Kraftstoffpumpe 12 zum Zulaufanschluß 21a der ersten Kraftstoffverteilerleiste 21 und zum Zulaufanschluß 22a der zweiten Kraftstoffverteilerleiste 22. Stromabwärts kurz hinter der zweiten Kraftstoffpumpe 12 teilt sich die Hochdruckleitung 24 in einen ersten Hochdruckleitungszweig 24.1 und in einen zweiten Hochdruckleitungszweig 24.2. Der erste Hochdruckleitungszweig 24.1 leitet den Kraftstoff von der zweiten Kraftstoffpumpe 12 durch den Zulaufanschluß 21a in die Kraftstoffverteilerleiste 21, und der zweite Hochdruckleitungszweig 24.2 leitet den Kraftstoff von der zweiten Kraftstoffpumpe 12 durch den Zulaufanschluß 22a in die zweite Kraftstoffverteilerleiste 22.

Es sei darauf hingewiesen, daß die Kraftstoffversorgungsanlage in Abweichung zum bevorzugt ausgewählten Ausführungsbeispiel so abgewandelt werden kann, daß am Pumpengehäuse 12g auf der Hochdruckseite 12h zwei Anschlüsse vorgesehen sind. In diesem Fall teilt sich die Hochdruckleitung 24 bereits innerhalb des Pumpengehäuses 12g in den ersten Hochdruckleitungszweig 24.1 und in den zweiten Hochdruckleitungszweig 24.2.

Die Hochdruckleitung 24 und auch die Hochdruckleitungszweige 24.1 und 24.2 bestehen vorzugsweise aus einem Rohr, wobei für das Rohr als Material vorzugsweise Metall verwendet werden kann. Dadurch erhält man eine sichere kraftstoffeste, hochdruckfeste und preisgünstig beschaffbare Verbindung. Weil sich die Hochdruckleitung 24 innerhalb des Pumpengehäuses 12g bzw. relativ kurz hinter der zweiten Kraftstoffpumpe 12, zumindest aber mit ausreichendem Abstand vor den Kraftstoffverteilerleisten 21, 22 in die beiden Hochdruckleitungszweig 24.1 und 24.2 aufteilt, wird erreicht, daß sich die beiden Kraftstoffverteilerleisten 21 und 22 relativ zueinander geringfügig bewegen können, ohne daß es zu unzulässigen Spannungen innerhalb der Hochdruckleitung 24 kommt. Die Hochdruckleitung 24 teilt sich so rechtzeitig vor den beiden Kraftstoffverteilerleisten 21 und 22 in die beiden Hochdruckleitungszweige 24.1 und 24.2, daß auftretende Relativbewegungen zwischen den beiden Kraftstoffverteilerleisten 21 und 22 auch bei Verwendung von kraftstoffestem, preisgünstig beschaffbarem starren Rohrmaterial nicht zu unzulässig großen Spannungen innerhalb der Hochdruckleitung 24 führen.

Die beiden Hochdruckleitungszweige 24.1 und 24.2 der Hochdruckleitung 24 sind vorzugsweise gleich lang. Damit wird erreicht, daß auch bei sich dynamisch stark ändernden Druckverhältnissen die Druckänderung innerhalb der beiden Kraftstoffverteilerleisten 21 und 22 zur selben Zeit und in gleicher Höhe geschieht. Dadurch kann die Qualität der Druckregelung innerhalb der Kraftstoffverteilerleisten 21 und 22 besonders gut und einfach beherrscht werden.

An der ersten Kraftstoffverteilerleiste 21 ist zum Erfassen des Drucks in der Kraftstoffverteilerleiste 21 ein Drucksensor 28 vorgesehen. Der Drucksensor 28 liefert je nach Druck in der Kraftstoffverteilerleiste 21 elektrische Signale an die Steuerungseinrichtung 20. An dem der zweiten Kraftstoffpumpe 12 zugewandten Ende 21e der ersten Kraftstoffverteilerleiste 21 ist ein Drucksteuerventil 30 vorgesehen. Das Drucksteuerventil 30 befindet sich unmittelbar im Bereich des Zulaufanschlusses 21a der ersten Kraftstoffverteilerleiste 21. Das Drucksteuerventil 30 ist vorzugsweise direkt an die erste Kraftstoffverteilerleiste 21 angeflanscht. Das Drucksteuerventil 30 kann aber auch direkt in die Kraftstoffverteilerleiste 21 integriert sein. Das Drucksteuerventil 30 ist elektrisch steuerbar; es erhält seine Steuersignale von der Steuerungseinrichtung 20.

Der Elektromotor 8, die Kraftstoffventile 16, der Drucksensor 28 und das Drucksteuerventil 30 sind über elektrische Leitungen 32 mit der Steuerungseinrichtung 20 verbunden. Die elektrische Leitung 32 zwischen den Kraftstoffventilen 16 und der Steuerungseinrichtung 20 ist so ausgeführt, daß die Steuerungseinrichtung 20 jedes der Kraftstoffventile 16 separat ansteuern kann. Zwecks besserer Unterscheidung gegenüber den anderen nichtelektrischen Leitungen sind die elektrischen Leitungen 32 mit punktierten Linien dargestellt.

Eine Kraftstoffleitung 34 führt vom Drucksteuerventil 30 in die Kraftstoffverbindung 10. Die Kraftstoffleitung 34 mündet vorzugsweise unmittelbar im Bereich der Niederdruckseite 12n der zweiten Kraftstoffpumpe 12 in die Kraftstoffverbindung 10. Dadurch kann die Kraftstoffleitung 34 relativ kurz ausgeführt werden.

Je nach Betriebsbedingung der Brennkraftmaschine kann die Steuerungseinrichtung 20 über das elektrisch steuerbare Drucksteuerventil 30 unmittelbar den Druck in der Kraftstoffverteilerleiste 21 beeinflussen. Weil sich das Drucksteuerventil 30 unmittelbar im Bereich des Zulaufanschlusses 21a der ersten Kraftstoffverteilerleiste 21 befindet, wird bei Ansteuerung des Drucksteuerventils 30 der durch das Drucksteuerventil 30 eingestellte Druck auf möglichst kurzem Weg auch in die zweite Kraftstoffverteilerleiste 22 übertragen. Weil die beiden Kraftstoffverteilerleisten 21 und 22 über die beiden Hochdruckleitungszweige 24.1 und 24.2 miteinander verbunden sind, erübrigt sich eine unmittelbare direkte Verbindungsleitung zwischen den beiden Kraftstoffverteilerleisten 21 und 22, was den Nachteil haben würde, daß bei nie ganz vermeidbaren Relativbewegungen zwischen den beiden Kraftstoffverteilerleisten 21 und 22 in der direkten Verbindungsleitung unzulässig große Spannungen entstehen würden oder aber es müßte ein flexibler Schlauch als Verbindungsleitung verwendet werden, was den Nachteil hätte, daß der flexible Verbindungsschlauch bei Verwendung von auf dem Markt erhältlichen Materialien nicht dauerfest wäre, insbesondere wegen Verwendung von Kraftstoff und wegen den hohen Drücken und relativ großer Temperaturschwankungen. Der Druck in der Druckleitung 24 kann während des normalen Betriebszustands beispielsweise um die 100 bar betragen, was 10 MPa entsprechen.

Die Kraftstoffventile 16 sind vorzugsweise starr im Zylinderkopf der Brennkraftmaschine verbaut. Die Anbindung der Kraftstoffventile 16 an den Kraftstoffverteilerleisten 21 bzw. 22 erfolgt jeweils über eine starre, mit einem Dichtring abgedichtete Verbindung. Dadurch entsteht eine relativ starre unnachgiebige Verbindung zwischen den Zylinderköpfen der Brennkraftmaschine und den Kraftstoffverteilerleisten 21 und 22. Bei Temperaturänderungen und während des Anbaus der Kraftstoffversorgungsanlage an die Brennkraftmaschine treten zwischen den beiden Kraftstoffverteilerleisten 21 und 22 Relativbewegungen auf, die berücksichtigt werden müssen, um Undichtheiten innerhalb der Kraftstoffversorgungsanlage zu vermeiden. Durch das vorgeschlagene Aufteilen der Hochdruckleitung 24 mit ausreichender Leitungslänge strömaufwärts vor den Kraftstoffverteilerleisten 21, 22 in die beiden Hochdruckleitungszweige 24.1 und 24.2, können die zu erwartenden Relativbewegungen problemlos aufgefangen werden.

Weil sich die zweite Kraftstoffpumpe 12 unmittelbar bei der Brennkraftmaschine befindet, können die Hochdruckleitung 24 bzw. die beiden Hochdruckleitungszweige 24.1 und 24.2 relativ kurz gehalten werden, insbesondere wenn sich die Zulaufanschlüsse 21a und 22a an den der zweiten Kraftstoffpumpe 12 zugewandten Enden 21e bzw. 22e der Kraftstoffverteilerleisten 21 und 22 befinden. Wenn die Kraftstoffversorgungsanlage so wie vorgeschlagen ausgeführt wird, dann kann der Druck des Kraftstoffs in den beiden Kraftstoffverteilerleisten 21 und 22 mit dem nur einen Drucksteuerventil 30 sehr genau gesteuert werden. Und es ist nicht erforderlich, daß die Kraftstoffverteilerleisten 21, 22 vom Kraftstoff durchspült werden, insbesondere muß an den Kraftstoffverteilerleisten 21, 22 kein Rücklaufanschluß vorgesehen werden, wodurch die Anzahl der erforderlichen Leitungen auf ein Minimum begrenzt werden kann. Und insbesondere ist kein zusätzlicher Anschluß zum Zurückführen von Kraftstoff aus der zweiten Kraftstoffverteilerleiste 22 in die Kraftstoffverbindung 10 oder zurück in den Kraftstoffvorratsbehälter 2 erforderlich.

## Patentansprüche

1. Kraftstoffversorgungsanlage zum Zuliefern von Kraftstoff für eine Brennkraftmaschine, mit einem Kraftstoffvorratsbehälter, einer ersten Kraftstoffpumpe (6), einer zweiten Kraftstoffpumpe (12), einer ersten Kraftstoffverteilerleiste (21) mit einem Zulaufanschluß (21a) und mit mindestens einem an der ersten Kraftstoffverteilerleiste (21) angeschlossenen Kraftstoffventil (16), mit mindestens einer zweiten Kraftstoffverteilerleiste (22) mit einem Zulaufanschluß (22a) und mit mindestens einem an der zweiten Kraftstoffverteilerleiste (22) angeschlossenen Kraftstoffventil (16) sowie mit einer Hochdruckleitung (24) über die die zweite Kraftstoffpumpe (12) mit dem Zulaufanschluß (21a) der ersten Kraftstoffverteilerleiste (21) und mit dem Zulaufanschluß (22a) der zweiten Kraftstoffverteilerleiste (22) verbunden ist, wobei die erste Kraftstoffpumpe (6) den Kraftstoff aus dem Kraftstoffvorratsbehälter in eine Kraftstoffverbindung (10) fördert und die zweite Kraftstoffpumpe (12) den Kraftstoff aus der Kraftstoffverbindung (10) über die Hochdruckleitung (24) zu der ersten Kraftstoffverteilerleiste (21) und zu der zweiten Kraftstoffverteilerleiste (22) fördert, **dadurch gekennzeichnet, daß** an der ersten Kraftstoffverteilerleiste (21) im Bereich des Zulaufanschlusses (21a) ein einen Hochdruck in der ersten Kraftstoffverteilerleiste (21a) und mindestens in der zweiten Kraftstoffverteilerleiste (22) steuerndes Drucksteuerventil (30) angebaut ist.

2. Kraftstoffversorgungsanlage nach Anspruch 1, **dadurch gekennzeichnet, daß** eine Kraftstoffleitung (34) vorgesehen ist und die Kraftstoffleitung (34) aus dem Drucksteuerventil (30) abströmenden Kraftstoff aufnimmt, wobei die Kraftstoffleitung (34) in die Kraftstoffverbindung (10) mündet und den aufgenommenen Kraftstoff in die Kraftstoffverbindung (10) ableitet.

3. Kraftstoffversorgungsanlage nach Anspruch 1 oder 2, **dadurch gekennzeichnet, daß** der Zulaufanschluß (21a) der ersten Kraftstoffverteilerleiste (21) an einem Ende (21e) der ersten Kraftstoffverteilerleiste (21) und der Zulaufanschluß (22a) der zweiten Kraftstoffverteilerleiste (22) an einem Ende (22e) der zweiten Kraftstoffverteilerleiste (22) vorgesehen sind.

4. Kraftstoffversorgungsanlage nach einem der vorhergehenden Ansprüche, **dadurch gekennzeichnet, daß** die Hochdruckleitung (24) in einen von der zweiten Kraftstoffpumpe (12) zu der ersten Kraftstoffverteilerleiste (21) führenden ersten Hochdruckleitungszweig (24.1) und in einen von der zweiten Kraftstoffpumpe (12) zu der zweiten Kraftstoffverteilerleiste (22) führenden zweiten Hochdruckleitungszweig (24.2) aufgeteilt ist.

5. Kraftstoffversorgungsanlage nach Anspruch 4, **dadurch gekennzeichnet, daß** der zweite Hochdruckleitungszweig (24.2) gleich lang ist wie der erste Hochdruckleitungszweig (24.1).

6. Kraftstoffversorgungsanlage nach Anspruch 4 oder 5, **dadurch gekennzeichnet, daß** sich die Hochdruckleitung (24) stromabwärts kurz hinter der zweiten Kraftstoffpumpe (12) in die beiden Hochdruckleitungszweige (24.1, 24.2) teilt.

7. Kraftstoffversorgungsanlage nach Anspruch 4 oder 5, **dadurch gekennzeichnet, daß** sich die Hochdruckleitung (24) innerhalb der zweiten Kraftstoffpumpe (12) in die beiden Hochdruckleitungszweige (24.1, 24.2) teilt.

8. Kraftstoffversorgungsanlage nach einem der Ansprüche 1 bis 7, **dadurch gekennzeichnet, daß** das Drucksteuerventil (30) an die erste Kraftstoffverteilerleiste (21) angeflanscht ist.

9. Kraftstoffversorgungsanlage nach einem der Ansprüche 1 bis 7, **dadurch gekennzeichnet, daß** das Drucksteuerventil (30) in die erste Kraftstoffverteilerleiste (21) integriert ist.

10. Kraftstoffversorgungsanlage nach einem der vorhergehenden Ansprüche, **dadurch gekennzeichnet, daß** die Hochdruckleitung (24, 24.1, 24.2) aus einem formstabilen Werkstoff, vorzugsweise aus Metall, gefertigt ist.

## Claims

1. Fuel supply system for supplying fuel for an internal combustion engine, having a fuel storage tank, a first fuel pump (6), a second fuel pump (12), a first fuel rail (21) having an inflow connection (21a) and having at least one fuel valve (16), which is connected to the first fuel rail (21), having at least one second fuel rail (22) having an inflow connection (22a) and having at least one fuel valve (16), which is connected to the second fuel rail (22), and having a high-pressure line (24), via which the second fuel pump (12) is connected to the inflow connection (21a) of the first fuel rail (21) and to the inflow connection (22a) of the second fuel rail (22), the first fuel pump (6) feeding the fuel from the fuel storage tank into a fuel connection (10) and the second fuel pump (12) feeding the fuel from the fuel connection (10) via the high-pressure line (24) to the first fuel rail (21) and to the second fuel rail (22), **characterized in that** a pressure control valve (30) which controls a high pressure in the first fuel rail (21) and at least in the second fuel rail (22) is mounted on the first fuel rail (21) in the region of the inflow connection (21a).

2. Fuel supply system according to Claim 1, **characterized in that** a fuel line (34) is provided and the fuel line (34) receives fuel flowing away from the pressure control valve (30), the fuel line (34) opening into the fuel connection (10) and conducting the fuel which it has received into the fuel connection (10).

3. Fuel supply system according to Claim 1 or 2, **characterized in that** the inflow connection (21a) of the first fuel rail (21) is provided at one end (21e) of the first fuel rail (21), and the inflow connection (22a) of the second fuel rail (22) is provided at one end (22e) of the second fuel rail (22).

4. Fuel supply system according to one of the preceding claims, **characterized in that** the high-pressure line (24) is divided into a first high-pressure-line branch (24.1) leading from the second fuel pump (12) to the first fuel rail (21) and into a second high-pressure-line branch (24.2) leading from the second fuel pump (12) to the second fuel rail (22).

5. Fuel supply system according to Claim 4, **characterized in that** the second high-pressure-line branch (24.2) is the same length as the first high-pressure-line branch (24.1).

6. Fuel supply system according to Claim 4 or 5, **characterized in that** the high-pressure line (24) is divided downstream, a short distance to the rear of the second fuel pump (12), into the two high-pressure-line branches (24.1, 24.2)

7. Fuel supply system according to Claim 4 or 5, **characterized in that** the high-pressure line (24) is divided within the second fuel pump (12) into the two high-pressure-line branches (24.1, 24.2).

8. Fuel supply system according to one of Claims 1 to 7, **characterized in that** the pressure control valve (30) is flanged onto the first fuel rail (21).

9. Fuel supply system according to one of Claims 1 to 7, **characterized in that** the pressure control valve (30) is integrated in the first fuel rail (21).

10. Fuel supply system according to one of the preceding claims, **characterized in that** the high-pressure line (24, 24.1, 24.2) is manufactured from a dimensionally stable material, preferably from metal.

## Revendications

1. Installation d'alimentation en carburant pour fournir du carburant à un moteur à combustion interne, comportent un réservoir à carburant, une première pompe à carburant (6), une seconde pompe à carburant (12), une première barrette distributrice de carburant (21) avec un branchement d'alimentation (21a) et au moins un injecteur (16) relié à cette première barrette distributrice de carburant (21), et au moins une seconde barrette distributrice de carburant (22) avec un branchement d'alimentation (22a) et au moins un injecteur de carburant (16) relié à cette seconde barrette distributrice de carburant (22), ainsi qu'une conduite haute pression (24) reliant la seconde pompe à carburant (12) au branchement d'alimentation (21a) de la première barrette distributrice de carburant (21) et au branchement d'alimentation (22a) la seconde barrette distributrice de carburant (22).
la première pompe à carburant (6) fournissant le carburant du réservoir a une conduite de liaison (10) et la seconde pompe à carburant (12) recevant le carburant de la conduite de liaison (10) pour le fournir par une conduite haute pression (24) à la première barrette distributrice de carburant (21) et à la seconde barrette distributrice de carburant (22).
**caractérisée en ce que**
au niveau du branchement d'alimentation (21a) *de* la première barrette distributrice de carburant (21) il est prévu une soupape de commande de pression (30) commandant la pression dans la première barrette distributrice de carburant (21a) et au moins dans la seconde barrette distributrice de carburant (22).

2. Installation d'alimentation en carburant selon la revendication 1,
**caractérisée par**
une conduite de carburant (34) qui reçoit le carburant sortant de la soupape de commande de pression (30).
la conduite de carburant (34) débouchant dans la conduite de liaison de carburant (10) et évacuent le carburant reçu vers la conduite de liaison de carburant (10).

3. Installation d'alimentation en carburant selon la revendication 1 ou 2,
**caractérisée en ce que**
le branchement d'alimentation (21a) de la première barrette distributrice de carburant (21) est prévu à une extrémité (21e) de la première barrette distributrice de carburant (21) et le branchement d'alimentation (22a) de la seconde barrette distributrice de carburant (22) est prévu à une extrémité (22e) de la seconde barrette distributrice de carburant (22).

4. Installation d'alimentation en carburant selon l'un des revendications précédentes.
**caractérisée en ce que**
la conduite haute pression (24) est répartie en une première branche de conduite haute pression (24.1) reliant la seconde pompe à carburant (12) à la première barrette distributrice de carburent (21) et en une seconde branche de conduite haute pression (24.2) reliant la seconde pompe à carburant (12) à la seconde barrette distributrice de carburant (22).

5. Installation d'alimentation en carburant selon la revendication 4,
caractértsée en ce que
la seconde branche de conduite haute pression (24.2) est de même longueur que la première branche de conduite haute pression (24.1).

6. Installation d'alimentation en carburant selon les revendications 4 ou 5,
**caractérisée en ce que**
la conduite haute pression (24) se subdivise en ses deux branches de conduits haute pression (24.1, 24.2) en aval de la seconde pompe à carburant (12) juste derrière celle-ci.

7. Installation d'alimentation en carburant selon la revendication 4 ou 5,
**caractérisée en ce que**
la conduite haute pression (24) se subdivise dans la seconde pompe à carburant (12) en ses deux branches de conduits haute pression (24.1. 24.2).

8. Installation d'alimentation en carburent selon l'une des revendications 1 à 7,
**caractérisée en ce que**
la soupape de commande de pression (30) est fixée à la première barrette distributrice de carburant (21).

9. Installation d'alimentation en carburant selon l'une des revendications 1 à 7,
**caractérisée en ce que**
la soupape de commande de pression (30) est intégrée à la première barrette distributrice de carburant (21).

10. Installation d'alimentation en carburant selon l'une des revendications précédentes.
**caractérisée en ce que**
la conduite haute pression (24, 24.1, 24.2) est réalisée en une matière de forme stable de préférence en métal.
